# EUROPÄISCHE PATENTSCHRIFT

(11) **EP 3 356 164 B1**
(45) Veröffentlichungstag und Bekanntmachung des Hinweises auf die Patenterteilung: **09.03.2022**
(21) Anmeldenummer: 16762781.9
(22) Anmeldetag: 06.09.2016
(51) Int. Cl.: B60G 3/20, B60K 7/00, B60G 3/22, B60G 7/00, B60G 15/06, B60K 1/04

(54) **RADAUFHÄNGUNG**
WHEEL SUSPENSION
SUSPENSION DE ROUE

(30) Priorität: 29.09.2015 DE 102015218793
(43) Veröffentlichungstag der Anmeldung: 08.08.2018
(73) Patentinhaber: ZF Friedrichshafen AG, 88046 Friedrichshafen (DE); Bayerische Motoren Werke Aktiengesellschaft, 80809 München (DE)
(72) Erfinder: KNAUB, Witalij, 49504 Lotte (DE); ELBERS, Christoph, 32351 Stemwede (DE); HEIDSIECK, Knut, 32257 Buende (DE); PRUCKNER, Alfred, 81545 München (DE); KÖNIG, Roland, Habach 82392 (DE); OCHNER, Udo, 85778 Haimhausen (DE)
(74) Vertreter: ZF Friedrichshafen AG
(86) Internationale Anmeldenummer: PCT/EP2016/070982
(87) Internationale Veröffentlichungsnummer: WO 2017/055028

(56) Entgegenhaltungen:
- EP-A1- 0 052 153
- WO-A1-2015/087659
- DE-A1-102011 011 011
- DE-A1-102011 080 236
- DE-A1-102013 210 575

## Beschreibung

Die Erfindung betrifft eine Radaufhängung für ein elektrisch antreibbares Rad eines Fahrzeuges gemäß dem Oberbegriff des Patentanspruches 1. Weiterhin betrifft die Erfindung eine Fahrzeugachse gemäß Patentanspruch 12.

Radaufhängungen für elektrisch antreibbare Räder von Fahrzeugen sind für sich gesehen in unterschiedlichen Bauformen bekannt. Eine mögliche Gestaltung des Antriebsstrangs besteht dabei im seit langem bekannten sogenannten Radnabenantrieb. Es handelt sich hierbei um ein Antriebskonzept, bei welchem die elektrische Antriebseinheit (in der Regel ein Elektromotor) in ein Rad des Fahrzeugs eingebaut ist und zugleich die Radnabe trägt. Aufgrund des Einbauorts unmittelbar innerhalb eines einzelnen Rades, koaxial zu dessen Radachse können klassische Antriebskomponenten wie insbesondere Übertragungswellen, Differentialgetriebe etc. entfallen. In diesem Zusammenhang sei beispielhaft verwiesen auf DE 10 2011 011 011 A1 sowie auf JP 2015-058825, welche jeweils eine Radaufhängung für ein elektrisch antreibbares Rad basierend auf dem Antriebskonzept eines Radnabenantriebs offenbaren. Bei den gezeigten Radaufhängungen ist der elektrische Motor entsprechend jeweils gleichachsig (koaxial) zur Radachse angeordnet, um auf diese Weise eine kompakte Bauform zu erreichen.

Aus dem Stand der Technik gemäß DE 10 2011 080 236 A1 ist eine Radaufhängung für ein elektrisch antreibbares Rad eines Fahrzeuges gemäß dem Oberbegriff des Anspruchs 1 bekannt, die einen sich in Fahrzeuglängsrichtung erstreckenden, über ein aufbauseitiges Lager gelenkig gegenüber dem Fahrzeugaufbau gelagerten Längslenker umfasst, in den ein Radträger zur drehbaren Lagerung des Rades auf einer Radachse sowie eine einen elektrischen Motor umfassende elektrische Antriebseinheit zum Antrieb des Rades integriert sind. Die Antriebseinheit wird dabei gebildet aus einem Elektromotor und einer Getriebeanordnung, bestehend aus einem Planetengetriebe (erste Stufe) und einer Stirnradstufe (zweite Stufe). Der elektrische Motor ist von der Radachse beabstandet, in Richtung des aufbauseitigen Lagers verschoben angeordnet und mittels der Getriebeanordnung mit dem Rad in Antriebsverbindung bringbar. Die beschriebene Radaufhängung ist Teil einer Verbundlenkerachse, wozu der Längslenker über ein quer zur Fahrzeuglängsrichtung sich erstreckendes Torsionsprofil mit einem gegenüberliegenden Längslenker verbunden ist. Die so gebildete Verbundlenkerachse ist über Verbundlenkerlager gegenüber dem Fahrzeugaufbau gelagert.

Ausgehend vom Stand der Technik gemäß DE 10 2011 080 236 A1 ist es eine Aufgabe der vorliegenden Erfindung, eine Radaufhängung der eingangs genannten Art derart weiterzubilden, dass diese verbesserte fahrdynamische Eigenschaften aufweist und dass für das mit der Radaufhängung ausgestattete Fahrzeug eine bessere Nutzung des Bauraums geschaffen wird.

Diese Aufgabe wird gelöst durch eine Radaufhängung gemäß den Merkmalen des Patentanspruches 1. Es wird demzufolge eine Radaufhängung für ein elektrisch antreibbares Rad eines Fahrzeuges beansprucht, umfassend einen sich in Fahrzeuglängsrichtung erstreckenden, über ein aufbauseitiges Lager gelenkig gegenüber dem Fahrzeugaufbau gelagerten Längslenker, in den ein Radträger zur drehbaren Lagerung des Rades auf einer Radachse sowie eine einen elektrischen Motor umfassende elektrische Antriebseinheit zum Antrieb des Rades integriert sind, wobei der elektrische Motor von der Radachse beabstandet, in Richtung des aufbauseitigen Lagers verschoben angeordnet und mittels einer Getriebeanordnung mit dem Rad in Antriebsverbindung bringbar ist. Die Radaufhängung zeichnet sich dadurch aus, dass der Radträger neben der Lagerung über den Längslenker zudem über zwei im Wesentlichen quer zur Fahrzeuglängsrichtung weisende, übereinander angeordnete Querlenker gelenkig gegenüber dem Fahrzeugaufbau gelagert ist.

Erfindungsgemäß wurde dabei zunächst erkannt, dass die Radaufhängung gemäß DE 10 2011 080 236 A1 verschiedene Vorteile mit sich bringt. So wird durch die radnahe Antriebsanordnung eine kompakte Bauweise erzielt, nämlich durch die Integration der elektrischen Antriebseinheit in den Längslenker. Durch die Anordnung des zum Einsatz kommenden elektrischen Motors außerhalb der Radmitte (Verschiebung in Richtung Hauptlager) verringert sich vorteilhaft dessen Einfluss auf die ungefederte Masse bei zugleich vorliegender Nähe zum Rad.

Zur Erzielung verbesserter fahrdynamischer Eigenschaften ist erfindungsgemäß die Idee entwickelt worden, den Längslenker mit darin integriertem Radträger sowie darin integrierter elektrischer Antriebseinheit als Bestandteil einer Einzelradaufhängung zu gestalten. Diese Idee wird dadurch umgesetzt, dass der Radträger einerseits über den Längslenker, andererseits über zwei im Wesentlichen quer zur Fahrzeuglängsrichtung weisende, übereinander angeordnete Querlenker gelenkig gegenüber dem Fahrzeugaufbau gelagert ist. Eine Verbindung des Längslenkers mit einem gegenüberliegenden Längslenker mittels eines Torsionsprofils - im Sinne einer Verbundlenkerachse - wird erfindungsgemäß also durch eine Anbindung über zwei bevorzugt etwa parallel übereinander liegende Querlenker ersetzt, wodurch eine kinematisch entkoppelte Einzelaufhängung des Rades mit den damit verbundenen verbesserten fahrdynamischen Eigenschaften erzielt wird. Für den Radträger der erfindungsgemäßen Radaufhängung sind somit mehrere Anbindungspunkte zum Fahrzeugaufbau geschaffen. Eine erste Anbindung an den Fahrzeugaufbau erfolgt über den Längslenker, daneben ist der Radträger über die beiden übereinander angeordneten Querlenker gegenüber dem Fahrzeugaufbau gelagert. Das dynamische Verhalten der Radaufhängung lässt sich damit vorteilhaft gestalten.

Eine Lagerung gegenüber dem Fahrzeugaufbau umfasst im Sinne der vorliegenden Erfindung eine (direkte) gelenkige Verbindung mit dem Fahrzeugaufbau. Daneben umfasst eine solche Lagerung eine gelenkige Verbindung mit einem Hilfsrahmen, der an dem Fahrzeugaufbau befestigt ist. Mit anderen Worten können bei der erfindungsgemäßen Radaufhängung der Längslenker oder die beiden Querlenker direkt mit dem Fahrzeugaufbau verbunden sein oder mit einem am Fahrzeugaufbau befestigten Hilfsrahmen verbunden sein.

Indem der Radträger über die beiden übereinander angeordneten Querlenker gelenkig gegenüber dem Fahrzeugaufbau gelagert ist, wird der Radträger auf vorteilhafte Weise in Fahrzeugquerrichtung geführt. Durch die Anordnung der Querlenker übereinander wird auf noch näher zu beschreibende Weise eine Vierpunktanbindung geschaffen, die den Spur- und Sturzverlauf des Rades auf vorteilhafte Weise beeinflusst.

Zweckmäßiger Weise ist bei der Radaufhängung der Längslenker über ein Lager mit dem Fahrzeugaufbau verbunden und sind die beiden Querlenker aufbauseitig jeweils über ein Lager mit einem dem Fahrzeugaufbau zugeordneten, daran befestigbaren Hilfsrahmen verbunden. Bei einer solchen Gestaltung ist der Radträger somit in drei Lagerpunkten gegenüber dem Fahrzeugaufbau gelagert.

Eine vorteilhafte Weiterbildung der Radaufhängung sieht vor, dass sämtliche der aufbauseitigen Lager bezogen auf die Fahrzeuglängsrichtung auf einer Seite der Radachse, vorzugsweise vor der Radachse angeordnet sind. Bei geeignet gewählten Abmessungen lässt sich die Radaufhängung auf diese Weise so gestalten, dass vorteilhafte Eigenschaften einer sogenannten Zentrallenkerachse, wie in der EP 0 052 153 A1 beschrieben, erzielt werden. Insbesondere ist dabei ein Einfedern des Längslenkers (und damit des Rades) ohne oder mit nur geringer Beeinflussung des Spurwinkels möglich.

Vorteilhaft ist vorgesehen, dass ein unterer Querlenker unterhalb der Radachse an den Radträger oder den Längslenker angelenkt ist, dass und ein oberer Querlenker oberhalb der Radachse an den Radträger oder den Längslenker angelenkt ist.

Zur Erzielung der vorteilhaften Eigenschaften der Zentrallenkerachse ist es zweckmäßig, dass die Erstreckungsrichtung der Querlenker gegenüber der Fahrzeugquerrichtung einen sogenannten Pfeilungswinkel einschließt. Dieser Pfeilungswinkel sorgt vorteilhaft dafür, dass der durch die Stellung des Radträgers - und somit der daran gelagerten Radachse - vorgegebene Spurwinkel von den Höhenbewegungen des Längslenkers nur wenig beeinflusst wird.

Alternativ oder ergänzend ist es denkbar, dass der zuvor genannte Pfeilungswinkel gering gehalten wird oder gar Null beträgt, um fahrzeugmittig mehr nutzbaren Bauraum zu schaffen. Um dennoch den Spurwinkel möglichst wenig von den Höhenbewegungen des Längslenkers zu beeinflussen, sieht eine vorteilhafte Weiterbildung der Radaufhängung demnach vor, dass sich die Querlenker parallel zur Fahrzeugquerrichtung erstrecken, wobei dem Längslenker ein Spurkorrekturlenker zugeordnet ist, der lenkerseitig mit einem zwischen Radträger und aufbauseitigem Lager angeordneten Lager an den Längslenker angelenkt ist und der aufbauseitig mit einem Lager an den Fahrzeugaufbau oder einen daran befestigten Hilfsrahmen angelenkt ist.

Eine vorteilhafte Weiterbildung der Radaufhängung sieht vor, dass der Spurkorrekturlenker so gestaltet und angeordnet ist, dass in Zusammenwirkung von Längslenker, Querlenkern und Spurkorrekturlenker ein Spurwinkel der Radachse nur gering von den Höhenbewegungen des Längslenkers beeinflusst wird.

Zur Ermöglichung der Funktion des Spurkorrekturlenkers weist zweckmäßiger Weise das aufbauseitige Lager des Längslenkers eine zumindest geringfügige Elastizität auf, um eine Querbeweglichkeit zu ermöglichen.

In den bei der erfindungsgemäßen Radaufhängung vorgesehene Längslenker ist eine elektrische Antriebseinheit integriert, wobei letztere einen elektrischen Motor umfasst, der sich mittels einer Getriebeanordnung mit dem Rad in Antriebsverbindung bringen lässt. Bevorzugt handelt es sich dabei um einen verhältnismäßig leichten, jedoch hochdrehenden Elektromotor, dessen Drehzahl mittels der Getriebeanordnung auf eine geeignete Abtriebsdrehzahl an der Abtriebswelle (zusammenfallend mit Radachse) übersetzt wird.

In konstruktiv günstiger Hinsicht umfasst die Getriebeanordnung dabei ein Stirnradgetriebe und ein Planetengetriebe, die in Kraftflussrichtung im Zugbetrieb betrachtet abtriebsseitig des elektrischen Motors in der Reihenfolge Planetengetriebe, Stirnradgetriebe angeordnet sind. Eine derartige Gestaltung bietet den Vorteil, dass der elektrische Motor zwar radnah, jedoch beabstandet zur Radmitte angeordnet werden kann und somit als teilgefederte Masse anzusehen ist. Aufgrund der vorgesehenen Getriebeübersetzung kommt ein hochdrehender elektrischer Motor zum Einsatz, wodurch die Antriebseinheit ein verhältnismäßig geringes Leistungsgewicht aufweist.

Ein konstruktiv vorteilhafter Aufbau der Antriebseinheit ergibt sich, indem das Planetengetriebe und das Stirnradgetriebe axial betrachtet an der dem Rad zugewandten Seite des elektrischen Motors angeordnet sind.

Zweckmäßigerweise zeichnet sich die Radaufhängung durch eine Feder-Dämpfer-Anordnung zur Abstützung des Längslenkers gegenüber dem Fahrzeugaufbau aus. Zur Erzielung eines möglichst geringen Bauraumbedarfs ist gemäß einer vorteilhaften Weiterbildung die Feder-Dämpfer-Anordnung an den Längslenker in einem zwischen elektrischer Antriebseinheit und Querlenkern liegenden Bereich angelenkt. Es ergibt sich in diesem Fall eine besonders kompakte Anordnung ("Package") der Radaufhängung. Alternativ dazu kann die Feder-Dämpfer-Anordnung an die elektrische Antriebseinheit angelenkt sein oder in einem in Bezug auf die Fahrzeuglängsrichtung hinter den Querlenkern liegenden Bereich an den Längslenker angelenkt sein.

Die Erfindung betrifft weiterhin eine Fahrzeugachse, die aus zwei sich gegenüberliegend angeordneten Radaufhängungen der zuvor beschriebenen Art sowie einem dazwischenliegenden Hilfsrahmen zur fahrzeugaufbauseitigen Anbindung eines oder mehrerer Lenker, insbesondere der Querlenker und/oder des Spurkorrekturlenkers je einer der Radaufhängungen gebildet wird. Der zum Einsatz kommende Hilfsrahmen kann dabei auf unterschiedliche Weise gestaltet sein, aufgrund seiner Befestigung an dem Fahrzeugaufbau ist der Hilfsrahmen im Sinne dieser Erfindung funktional als Teil des Fahrzeugaufbaus zu verstehen.

Gemäß einer vorteilhaften Weiterbildung dient der Hilfsrahmen als Aufnahme für eine Energiespeichereinrichtung und/oder eine Steuerungseinrichtung. Bei der Energiespeichereinrichtung kann es sich insbesondere um eine mitzuführende Batterie handeln, wobei die erfindungsgemäße Radaufhängung bzw. die daraus gebildete Fahrzeugachse aufgrund seiner bzw. ihrer konstruktiven Gestaltung einen besonders großen Bauraum für eine Energiespeichereinrichtung und/oder Steuerungseinrichtung bietet.

Die Erfindung wird nachfolgend anhand einer Zeichnung näher erläutert und beschrieben. Daraus ergeben sich auch weitere Funktionen und vorteilhafte Effekte. In der Zeichnung zeigt:
- Fig. 1: eine perspektivische Ansicht einer erfindungsgemäßen Radaufhängung von schräg hinten,
- Fig. 2: die Radaufhängung aus Fig. 1 in Ansicht von schräg vorn,
- Fig. 3: die Radaufhängung aus Fig. 1 und 2 in Draufsicht,
- Fig. 4: eine Fahrzeugachse in perspektivischer Ansicht von schräg hinten,
- Fig. 5: die Fahrzeugachse aus Fig. 4 in Ansicht von schräg vorn,
- Fig. 6: die Fahrzeugachse aus Fig. 4 und 5 in Ansicht von unten,
- Fig. 7: eine weitere Fahrzeugachse in Ansicht von schräg vorn,
- Fig. 8: die Fahrzeugachse aus Fig. 7 in Ansicht von unten.

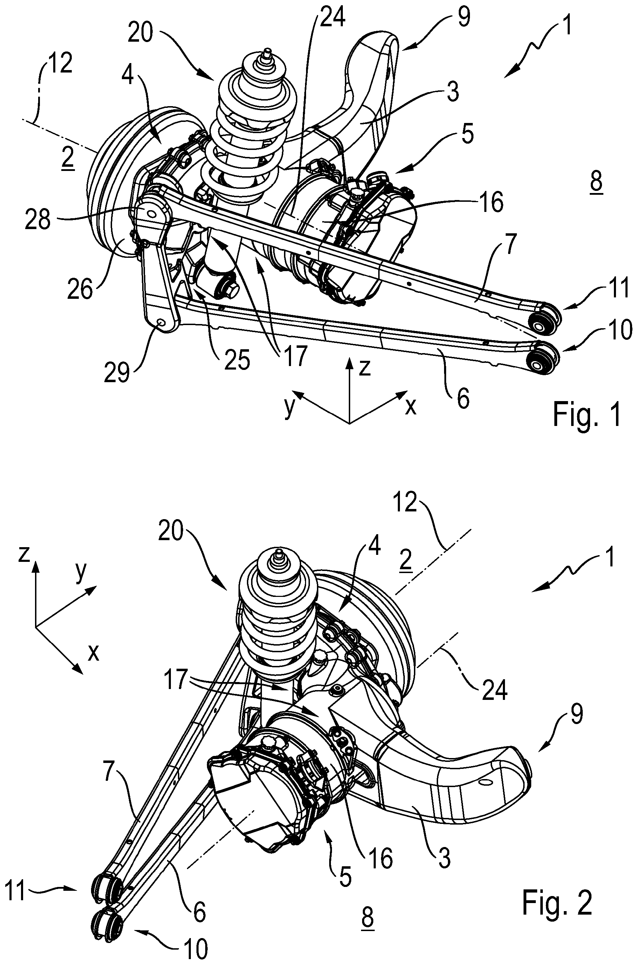

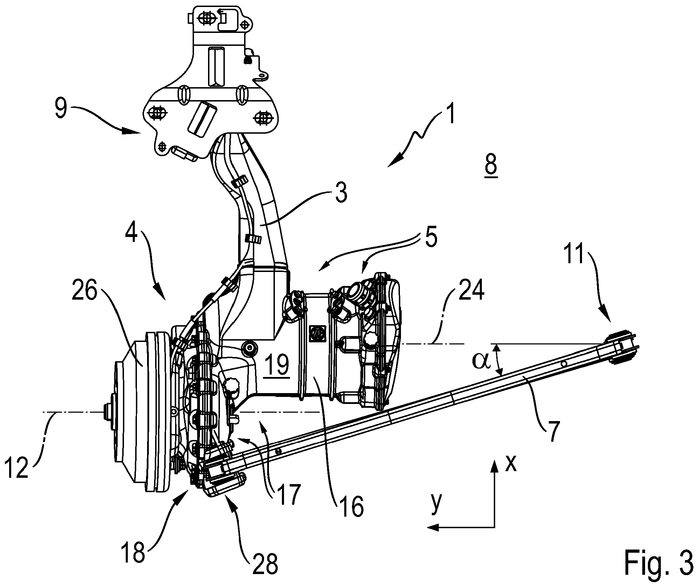

Eine Radaufhängung 1 gemäß einem Ausführungsbeispiel der Erfindung ist in den Fig. 1-3 in unterschiedlichen Ansichten dargestellt. Dabei zeigt Fig. 1 eine Ansicht von schräg hinten, Fig. 2 eine Ansicht von schräg vorne, Fig. 3 eine Draufsicht. Zur Orientierung ist jeweils ein Koordinatensystem angegeben, bei welchem es sich um ein rechtwinkliges Koordinatensystem handelt und wobei X der Fahrzeuglängsrichtung, Y der Fahrzeugquerrichtung und Z der Fahrzeughochrichtung entspricht. Da die Fig. 1-3 die gleiche Radaufhängung 1 in verschiedenen Ansichten zeigen, werden mit gleichen Bezugszeichen gleiche Bauteile bezeichnet. Die nachfolgende Beschreibung des Aufbaus sowie der Wirkungsweise der Radaufhängung 1 bezieht sich somit auf die Fig. 1-3 gemeinsam, wobei zur Erläuterung bestimmter Einzelheiten bedarfsweise auf jeweils die Fig. Bezug genommen wird, welche diese Einzelheit am besten darstellt.

Bei der gezeigten Radaufhängung 1 handelt es sich um eine Radaufhängung für ein elektrisch antreibbares Rad 2 eines Fahrzeugs. Das Rad 2 ist aus Darstellungsgründen nicht abgebildet, seine Lage auf einer Radachse 12 wird jedoch durch das Bezugszeichen des Rades 2 angedeutet. In einen sich im Wesentlichen in Fahrzeuglängsrichtung X erstreckenden Längslenker 3 sind ein Radträger 4 zur drehbaren Lagerung des Rades 2 um die Radachse 12 sowie eine elektrische Antriebseinheit 5 zum Antrieb des Rades 2 integriert. Der Längslenker 3 ist dazu zumindest bereichsweise hohl ausgeführt und erstreckt sich von einem bezogen auf die Fahrzeuglängsrichtung X vorderen Lager 9 bis in einen als Radträger 4 dienenden hinteren Bereich, der zur drehbaren Lagerung des Rades 2 dient. Wie am besten in Fig. 3 zu sehen, weist der Längslenker 3 über dessen Längsverlauf (Fahrzeuglängsrichtung X) eine etwa bogenförmige Krümmung auf.

Ausgehend vom vorderen Bereich des Längslenkers 3 (nahe des Lagers 9) erweitert sich der Längslenker 3 nach hinten (bezogen auf die Fahrzeuglängsrichtung x) langsam, um in einem näher an der Radachse 12 als dem Lager 9 gelegenen Bereich ein zumindest teilweise etwa zylinderförmiges Gehäuse auszubilden, das vom bogenförmigen Verlauf des Längslenkers 3 in seitlicher Richtung (in Fig. 3 in negativer Y-Fahrzeugrichtung) abragt. Dieser Gehäusebereich des Längslenkers 3 einschließlich des sich bis zum Radträger 4 nach hinten erstreckende Bereich des Längslenkers 3 nehmen eine elektrische Antriebseinheit 5 auf, die im Wesentlichen einen elektrischen Motor 16 umfasst, der sich mittels einer Getriebeanordnung 17 mit dem Rad 2 in Antriebsverbindung bringen lässt. Der elektrische Motor 16 ist im seitlich abragenden, zylindrischen Teil des Längslenkers 3 untergebracht. Zur Herstellung einer Antriebsverbindung zwischen dem elektrischen Motor 16 und der das Rad 2 antreibenden Radachse 12 dient eine Getriebeanordnung 17, die im Rahmen der hier vorliegenden Erfindung nicht im Einzelnen dargestellt ist. Hinsichtlich deren Aufbaus sei beispielsweise auf die DE 10 2011 080 236 A1 verwiesen, deren Offenbarungsgehalt hiermit durch Bezugnahme eingeschlossen wird.

Als wesentliche Merkmale weist die Getriebeanordnung 17 ein Stirnradgetriebe 18 und ein Planetengetriebe 19 auf. Dabei ist das Planetengetriebe 19 koaxial zum elektrischen Motor 16 auf der Motorwelle 24 angeordnet. Das Stirnradgetriebe 18 umfasst ein koaxial zur Motorwelle 24 angeordnetes erstes Stirnrad, das mit einem auf der Radachse 12 angeordneten zweiten Stirnrad kämmt. Die Funktionsweise der Getriebeanordnung 17 ergibt sich folgendermaßen: der elektrische Motor 16 ist mit einem Sonnenrad des Planetengetriebes 19 verbunden, wobei ein Steg des Planetengetriebes 19 über eine Stegwelle mit dem ersten Stirnrad des Stirnradgetriebes 18 verbunden ist. Aufgrund des kämmenden Eingriffs treibt das erste Stirnrad das zweite Stirnrad des Stirnradgetriebes 18 an, welches wiederum über die Radachse 12 - über eine daran befestigte Radnabe - mit dem Rad 2 verbunden ist. Es sei angemerkt, dass das Hohlrad des Planetengetriebes 19 gehäusefest angeordnet ist. Bei der somit beschriebenen Getriebeanordnung 17 sind also das Stirnradgetriebe 18 und das Planetengetriebe 19 in Kraftflussrichtung im Zugbetrieb betrachtet abtriebseitig des elektrischen Motors 16 in der Reihenfolge Planetengetriebe 19, Stirnradgetriebe 18 angeordnet. Aufgrund der damit vorliegenden hohen zweistufigen Untersetzung kann es sich bei dem elektrischen Motor um einen hochdrehenden elektrischen Motor 16 handeln, so dass die Antriebseinheit 5 insgesamt ein verhältnismäßig geringes Leistungsgewicht (Verhältnis von Leistung zu Gewicht) aufweist.

Aufgrund des durch das Stirnradgetriebe 18 vorgegebenen Achsabstands zwischen Motorachse 24 und Radachse 12 ist der elektrische Motor 16 von der Radachse 12 beabstandet angeordnet. Der elektrische Motor 16, das Planetengetriebe 19 sowie ein Teil des Stirnradgetriebes 18 stellen aufgrund ihrer Lage außerhalb der Radmitte jeweils teilgefederte Massen dar, was sich vorteilhaft auf deren mechanische Beanspruchung - und damit die zu erwartende Lebensdauer - sowie auf das fahrdynamische Verhalten der Radaufhängung auswirkt. Indem das Planetengetriebe 19 und das Stirnradgetriebe 18 axial betrachtet an der dem Rad 2 zugewandten Seite des elektrischen Motors 16 angeordnet sind, weist der Längslenker 3 eine angesichts der Integration eines radnahen elektrischen Antriebs eine kompakte Bauform auf.

Als Radträger 4 sei im Zusammenhang der beschriebenen Erfindung der Bereich des Längslenkers 3 zu verstehen, welcher die Radlagerung des Rades 2 übernimmt. Der Radträger 4 ist somit Teil des Längslenkers 3, beispielsweise indem dieser einteilig mit dem Längslenker 3 ausgeführt oder daran befestigt ist.

Der Radträger 4, welcher das Rad 2 drehbar lagert, ist über drei Anbindungen gegenüber einem Fahrzeugaufbau 8 gelagert, der aus Darstellungsgründen in den Fig. 1-3 jeweils vereinfacht durch das Bezugszeichen 8 angedeutet ist. Zunächst ist der Radträger 4 über den sich bogenförmig bezogen auf die Fahrzeuglängsrichtung X nach vorn erstreckenden Längslenker 3 mittels des Lagers 9 gegenüber dem Fahrzeugaufbau 8 gelagert. Ergänzend zu den Fig. 1 und 2 ist in Fig. 3 auch die fahrzeugaufbauseitige Anbindung des Lagers 9 dargestellt. Der Radträger 4 ist weiterhin über zwei im Wesentlichen quer zur Fahrzeuglängsrichtung X weisende, übereinander angeordnete Querlenker 6,7 gelenkig gegenüber dem Fahrzeugaufbau 8 gelagert.

Wie in Fig. 1 zu sehen, weist die Radaufhängung 1 dazu einen unteren Querlenker 6 und einen oberen Querlenker 7 auf. Es handelt sich bei den Querlenkern 6, 7 um jeweils gleichartige strebenförmige Zweipunktlenker. Bezogen auf eine zur Fahrzeughochrichtung Z parallele fiktive Ebene sind der untere Querlenker 6 und der obere Querlenker 7 übereinanderliegend angeordnet. Jeder der Querlenker 6, 7 ist an seinem dem Radträger 4 zugewandten Ende mit dem bezogen auf die Fahrzeuglängsrichtung X hinteren Bereich des Längslenkers 3 (nahe des Radträgers 4) gelenkig verbunden. Der untere Querlenker 6 ist über das Lager 29 mit dem Längslenker 3 verbunden, der obere Querlenker 7 ist über das Lager 28 mit dem Längslenker 3 verbunden.

Aufbauseitig sind die Querlenker 6, 7 jeweils über ein Lager 10, 11 gegenüber dem Fahrzeugaufbau 8 gelenkig gelagert. Eine solche Lagerung kann beispielsweise auch dadurch erfolgen, dass die Lager 10, 11 mit einem am Fahrzeugaufbau 8 befestigbaren Hilfsrahmen (in den Fig. 1-3 nicht gezeigt) verbunden sind. Dem unteren Querlenker 6 ist in diesem Zusammenhang das Lager 10 zugeordnet, dem oberen Querlenker 7 ist das Lager 11 zugeordnet.

Wie in Fig. 3 zu sehen, sind sämtliche der aufbauseitigen Lager 9, 10, 11 (das Lager 10 ist in der Darstellung durch das darüber liegende Lager 11 verdeckt), das heißt die Anbindungspunkte des Längslenkers 3, des unteren Querlenkers 6 und des oberen Querlenkers 7, bezogen auf die Fahrzeuglängsrichtung X auf einer Seite der Radachse 12, nämlich vor der Radachse 12 angeordnet. Demzufolge weisen gemäß dem in den Fig. 1-3 gezeigten Ausführungsbeispiel die Querlenker 6, 7 eine sogenannte Pfeilung auf. Mit anderen Worten schließt die Erstreckungsrichtung der Querlenker 6, 7 (aufgrund der draufschauenden Perspektive von Fig. 3 ist in der Fig. nur der obere Querlenker 7 zu sehen, da der untere Querlenker 6 von diesem verdeckt wird) gegenüber der Fahrzeugquerrichtung Y einen Pfeilungswinkel α ein. Im gezeigten Ausführungsbeispiel beträgt dieser Pfeilungswinkel α einen zwischen 0 und 45 Grad liegenden Wert. Der hier vorliegende Pfeilungswinkel α sorgt in Kombination mit der zuvor beschriebenen kinematischen Anbindung vorteilhaft dafür, dass sich über den Einfederweg (Höhenbewegungen des Radträgers) eine Vorspurkonstanz erreichen lässt. Der Pfeilungswinkel α ist so gewählt, dass die Querlenker 6, 7 sich kollisionsfrei gegenüber dem elektrischen Motor 16 der Antriebseinheit 5 bewegen können.

Wie in den Fig. 1 und 2 dargestellt (in Fig. 3 jedoch aus Darstellungsgründen weggelassen), weist die Radaufhängung 1 gemäß dem gezeigten Ausführungsbeispiel weiterhin eine Feder-Dämpfer-Anordnung 20 zur Abstützung des Längslenkers 3 gegenüber dem Fahrzeugaufbau 8 auf. Die Feder-Dämpfer-Anordnung 20 erstreckt sich im Wesentlichen parallel zur Fahrzeughochrichtung Z und ist im gezeigten Ausführungsbeispiel, wie am besten in Fig. 1 zu sehen, an den Längslenker 3 in einem zwischen elektrischer Antriebseinheit 5 und Querlenkern 6, 7 liegenden Bereich über ein Lager 25 angelenkt. Die damit verwirklichte Positionierung und Anbindung der Feder- Dämpfer- Anordnung 20 führt in Kombination mit dem in den Längslenker 3 integrierten Antrieb zu einer insgesamt sehr kompakten Bauform der Radaufhängung 1. Als vorteilhaft ist insbesondere zu erwähnen, dass seitlich der elektrischen Antriebseinheit 5, also im mittigen Fahrzeugbereich, verhältnismäßig viel Bauraum zur Verfügung steht.

Es versteht sich, dass sich aus einer wie anhand der Fig. 1-3 beschriebenen Radaufhängung 1 und einer weiteren dazu gegenüberliegend angeordneten Radaufhängung eine Fahrzeugachse bilden lässt. Gemäß einer vorteilhaften - anhand des in den Fig. 1-3 erläuterten Ausführungsbeispiels nicht gezeigten - Weiterbildung, könnte eine solche Fahrzeugachse einen zwischen den Radaufhängungen angeordneten Hilfsrahmen aufweisen, welcher dann zur fahrzeugaufbauseitigen Anbindung insbesondere des unteren Querlenkers 6 und des oberen Querlenkers 7 der sich gegenüberliegenden Radaufhängungen dient. Ein solcher Hilfsrahmen ist dann bevorzugt fest mit dem Fahrzeugaufbau verbunden und somit in funktionaler Hinsicht Teil des Fahrzeugaufbaus.

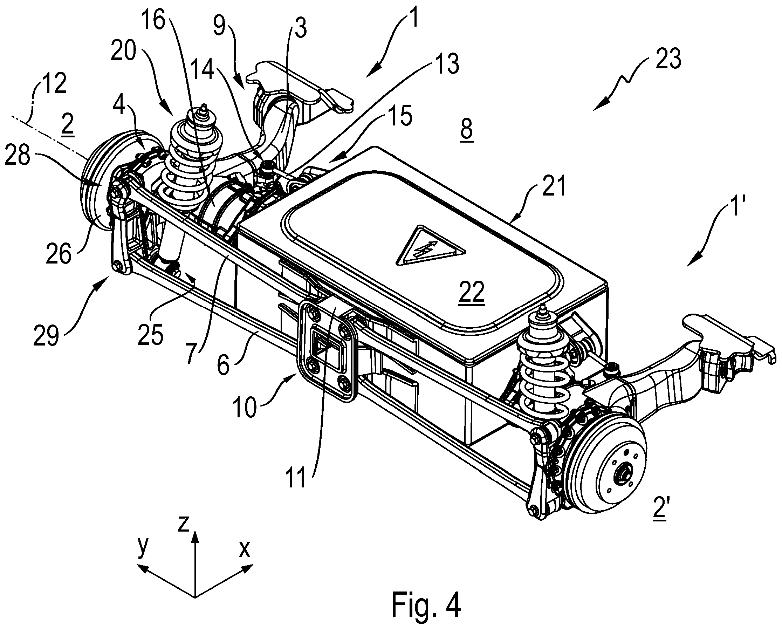

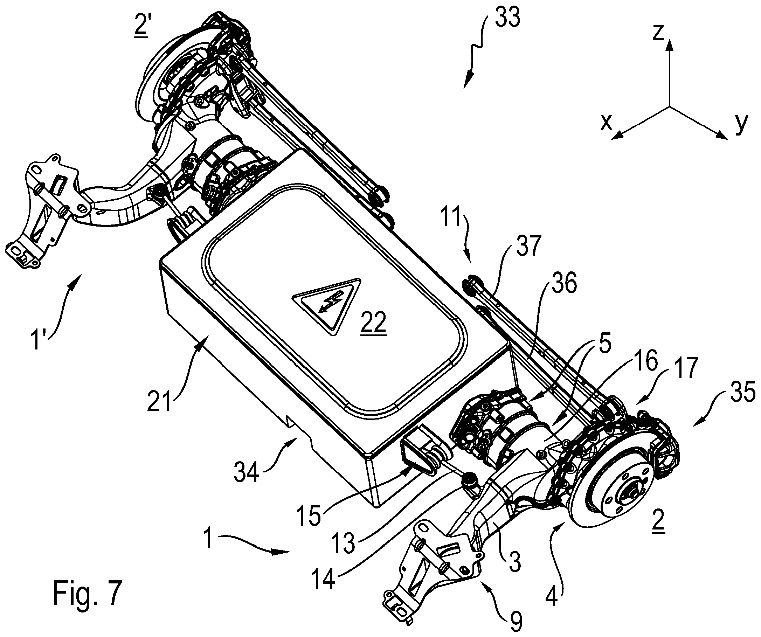

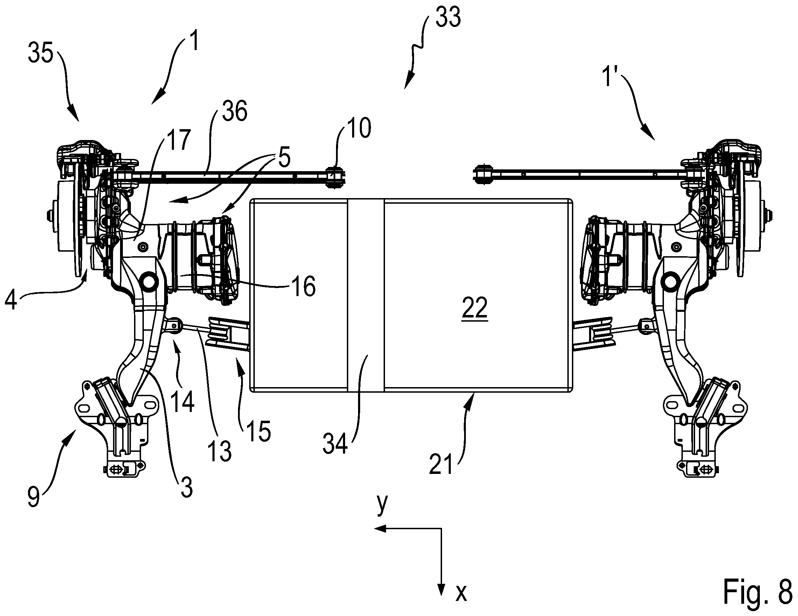

In den Fig. 4-6 sowie in den Fig. 7 und 8 werden nachfolgend zwei Ausführungsbeispiele für Fahrzeugachsen 23 beziehungsweise 33 beschrieben. Das anhand der Fig. 4-6 beschriebene Ausführungsbeispiel einer Fahrzeugachse 23 unterscheidet sich von dem anhand der Fig. 7 und 8 beschriebenen Ausführungsbeispiel einer Fahrzeugachse 33 insbesondere durch die Länge der zum Einsatz kommenden Querlenker, durch die Art der Bremseinrichtungen sowie die Möglichkeit der Abgasführung.

Das in den Fig. 4-6 beschriebene Ausführungsbeispiel einer Fahrzeugachse 23 ist in den Fig. 4-6 in unterschiedlichen Ansichten dargestellt. Gleiche Bezugszeichen in den Fig. 4-6 bezeichnen daher gleiche Bauteile. Die Fahrzeugachse 23, wie in Fig. 4 in einer Ansicht von schräg hinten zu sehen, ist gebildet aus zwei sich gegenüberliegend angeordneten Radaufhängungen, nämlich einer bezogen auf die Fahrzeuglängsrichtung X linksseitig angeordneten Radaufhängung 1 und einer bezogen auf die Fahrzeuglängsrichtung X rechtsseitig angeordneten Radaufhängung 1'. Die Radaufhängungen 1, 1' sind zueinander spiegelsymmetrisch bezogen auf die Fahrzeugmitte aufgebaut und angeordnet. Zwischen den Radaufhängungen 1, 1' befindet sich ein Hilfsrahmen 21, der im gezeigten Ausführungsbeispiel eine im Wesentlichen quaderförmige Grundform aufweist und sich bezogen aus seiner größte Ausdehnung in Fahrzeugquerrichtung Y erstreckt. Der Hilfsrahmen 21 ist so gestaltet, dass dieser als Aufnahme für eine als Energiespeichereinrichtung dienende Batterie 22 dient. Daneben könnte der Hilfsrahmen 21 eine zugehörige Steuerungseinrichtung aufnehmen. Die Batterie 22 kann insbesondere dazu genutzt werden, die elektrischen Motoren der Radaufhängungen 1, 1' mit Energie zu versorgen.

Es sei angemerkt, dass aufgrund der gleichartigen Ausbildung der Radaufhängungen 1 und 1' zur Vermeidung von Wiederholungen und zur Vereinfachung der Darstellung nur die Merkmale der Radaufhängung 1 im Einzelnen bezeichnet und erläutert werden. Die Erläuterungen sind in gleicher Weise auf die Radaufhängung 1' anzuwenden.

Die bei der Fahrzeugachse 23 gemäß Fig. 4-6 zum Einsatz kommenden Radaufhängungen 1, 1' entsprechen in vielen wesentlichen Merkmalen der bereits anhand der Fig. 1-3 erläuterten Radaufhängung 1. Zur Vermeidung von Wiederholungen sei daher auf die dortigen Erläuterungen verwiesen. Im Folgenden sei daher nur auf die davon abweichenden Merkmale eingegangen.

Der bei der Fahrzeugachse 23 eingesetzten Radaufhängung 1 liegt die Überlegung zugrunde, den seitlich der elektrischen Antriebseinheit 5 verfügbaren Bauraum zu vergrößern. Denn gerade bei heckangetriebenen Fahrzeugen mit reinem Elektroantrieb fällt oftmals die Positionierung einer benötigten Batterie schwer. Ähnliches gilt für ein Hybridfahrzeug, das die hinteren Räder elektrisch antreibt. Grundlegender Vorteil einer wie mit der Radaufhängung 1 realisierten radnahen Antriebsvorrichtung ist der freie Bauraum zwischen den Rädern, welcher vorteilhaft als Batteriebauraum verwendet werden kann. Bei Ausführung der Radaufhängung mit einem Pfeilungswinkel, wie anhand des in den Fig. 1 bis 3 gezeigten Ausführungsbeispiels erläutert, ist der seitlich der elektrischen Antriebseinheit 5 zur Verfügung stehende Bauraum durch die zur Fahrzeugmitte hinweisenden Querlenker eingeschränkt. Durch eine Verringerung des Pfeilungswinkels a, beispielsweise gegen 0, kann mehr Bauraum im mittigen Fahrzeugbereich geschaffen werden. Zur Beibehaltung einer gleichen Güte der Achskinematik müssten die Querlenker in diesem Fall jedoch eine Länge aufweisen, welche die Querlenker über die Fahrzeugmitte hinaus laufen ließe, was wiederum zu einer Kollision der Querlenker der jeweiligen Seite führen würde.

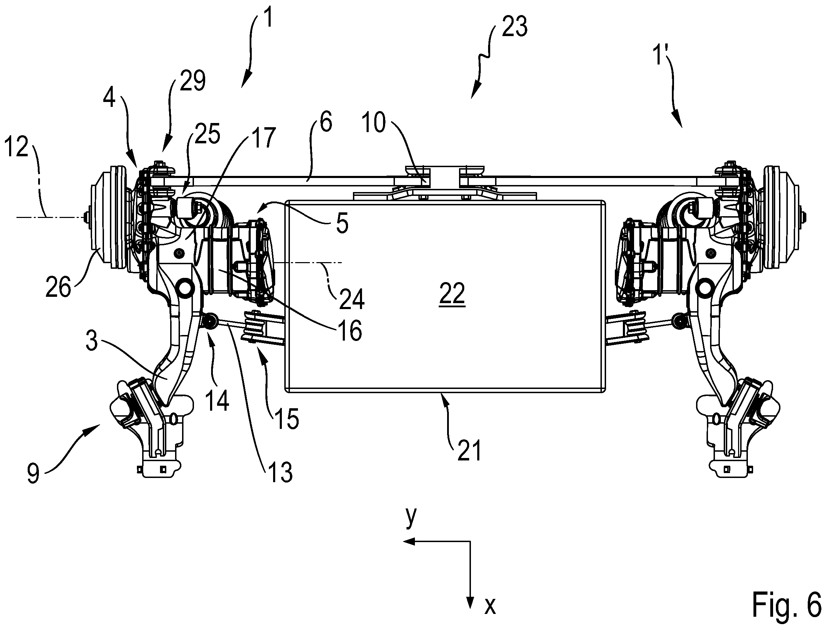

Bei der in den Fig. 4-6 gezeigten Fahrzeugachse 23 sind die Querlenker 6, 7 zur Schaffung eines möglichst großen Bauraums für die Batterie 22 daher - abweichend von der in den Fig. 1 bis 3 gezeigten Ausführung - parallel zur Fahrzeugquerrichtung Y ausgerichtet, wie am besten anhand der Fig. 6, welche eine Ansicht von unten auf die Fahrzeugachse 23 zeigt, zu sehen.

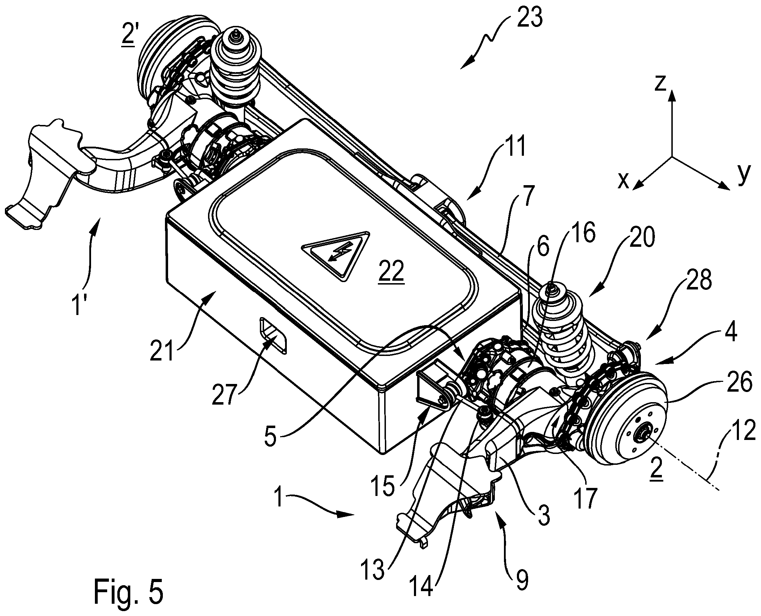

Wie in Fig. 4 zu sehen, ist der untere Querlenker 6 mittels eines Lagers 10 und ist der obere Querlenker 7 mittels eines Lagers 11 in einem mittigen Fahrzeugbereich mit dem Hilfsrahmen 21 verbunden. Um die aufgrund des Wegfalls des Pfeilungswinkels α (gleich 0) negativ beeinflusste Raderhebungskurve auszugleichen, ist dem Längslenker 3 ein Spurkorrekturlenker 13 zugeordnet. Dieser lässt sich am besten in der Fig. 5 (Ansicht von schräg vorn) beziehungsweise der Fig. 6 (Ansicht von unten) erkennen. Der Spurkorrekturlenker 13 ist lenkerseitig mit einem zwischen Radträger 4 und aufbauseitigem Lager 9 angeordneten Lager 14 an den Längslenker 3 angelenkt. Der Spurkorrekturlenker 13 ist als Zweipunktlenker ausgeführt und an seinem aufbauseitigen Ende mittels eines Lagers 15 gegenüber dem Fahrzeugaufbau gelagert, hier durch gelenkige Verbindung mit dem Hilfsrahmen 21.

Der Spurkorrekturlenker 13 ist damit platzsparend bezogen auf die Fahrzeuglängsrichtung X vor der elektrischen Antriebseinheit 5 positioniert und von seiner Länge her so kurz gehalten, dass dieser nicht weiter in Richtung Fahrzeugmitte ragt, als das die elektrische Antriebseinheit 5 umgebende Gehäuse. Die Bauraumausnutzung zwischen den Rädern wird somit nicht nachteilig beeinflusst. Der Spurkorrekturlenker 13 ist so gestaltet und angeordnet, dass in Zusammenwirkung von Längslenker 3, Querlenkern 6, 7 und Spurkorrekturlenker 13 ein mit der Radachse 12 erzielter Spurwinkel weitestgehend unabhängig von Höhenbewegungen des Längslenkers 3 ist. Um eine Spurkorrektur zu ermöglichen, weist das aufbauseitige Lager 9 des Längslenkers 3 zu Ermöglichung einer Querbeweglichkeit eine zumindest geringfügige Elastizität auf.

Bei dem in den Fig. 4-6 gezeigten Ausführungsbeispiel der Fahrzeugachse 23 erstrecken sich die Querlenker 6, 7, wie in Fig. 4 zu sehen, annähernd bis zur Fahrzeugmitte. Die große Länge wirkt sich vorteilhaft auf die fahrdynamischen Eigenschaften der Fahrzeugachse 23 aus. Zur Ermöglichung der Abgasrohrführung bietet sich die Möglichkeit, durch die Batterie 22 hindurch eine Abgasrohrdurchführung 27, wie in Fig. 5 angezeigt, vorzusehen.

Bei der in den Fig. 1-3 beschriebenen Radaufhängung 1 beziehungsweise der anhand der Fig. 4-6 beschriebenen Fahrzeugachse 23 kommt als Bremseinrichtung jeweils eine Trommelbremse 26 zum Einsatz.

In den Fig. 7 und 8 ist in unterschiedlichen Darstellungen ein weiteres Ausführungsbeispiel für eine Fahrzeugachse 33 dargestellt. Die Fahrzeugachse 33 gleicht in wesentlichen Merkmalen der Fahrzeugachse 23, weshalb zur Vermeidung von Wiederholungen auf die vorigen Erläuterungen verwiesen wird. Davon abweichend sind bei der Fahrzeugachse 33 die zum Einsatz kommenden Querlenker 36 und 37 kürzer ausgeführt, enden also deutlich vor der Fahrzeugmitte. Aufgrund der kürzen Ausführung der Querlenker lässt sich eine konventionelle asymmetrische Abgasrohrführung 34, umsetzen, welche durch einen unteren Bereich der Batterie verläuft und somit den der Batterie 22 zur Verfügung stehenden Bauraum kaum beeinträchtigt.

Bei dem in den Fig. 7 und 8 gezeigten Ausführungsbeispiel der Fahrzeugachse 33 kommt als Bremseinrichtung eine Scheibenbremse 35 zum Einsatz.

Es ist festzustellen, dass die Radaufhängung 1 beziehungsweise die damit ausgestatteten Fahrzeugachsen 23, 33 die eingangs genannte Aufgabe lösen. Die Radaufhängung weist eine gegenüber einer Verbundlenkerachse deutlich verbesserte Fahrdynamik auf, zudem besteht aufgrund der drei Hauptanbindungspunkte zum Fahrzeugaufbau eine verbesserte Möglichkeit der Schwingungsentkopplung des Antriebs. Zugleich ergibt sich aufgrund der Verwendung der in die Längslenker integrierten Antriebe ein Bauraum seitlich der Radaufhängungen, der sich vorteilhaft beispielsweise für die Anordnung einer Batterie nutzen lässt. Zur Vergrößerung des zur Verfügung stehenden Bauraums lässt sich ein hinsichtlich der Fahrdynamik vorteilhafter Pfeilungswinkel auch auf null reduzieren, wenn zum Ausgleich dem Längslenker ein Spurkorrekturlenker zugeordnet wird.

### Bezugszeichen

- 1: Radaufhängung
- 2: Rad
- 3: Längslenker
- 4: Radträger
- 5: elektrische Antriebseinheit
- 6: unterer Querlenker
- 7: oberer Querlenker
- 8: Fahrzeugaufbau
- 9: Lager Längslenker (aufbauseitig)
- 10: Lager unterer Querlenker (aufbauseitig)
- 11: Lager oberer Querlenker (aufbauseitig)
- 12: Radachse
- 13: Spurkorrekturlenker
- 14: Lager Spurkorrekturlenker (radseitig)
- 15: Lager Spurkorrekturlenker (aufbauseitig)
- 16: elektrischer Motor
- 17: Getriebeanordnung
- 18: Stirnradgetriebe
- 19: Planetengetriebe
- 20: Feder-Dämpfer-Anordnung
- 21: Hilfsrahmen
- 22: Batterie
- 23: Fahrzeugachse
- 24: Motorwelle
- 25: Lager
- 26: Trommelbremse
- 27: Abgasrohrdurchführung
- 28: Lager oberer Querlenker (radseitig)
- 29: Lager unterer Querlenker (radseitig)
- 33: Fahrzeugachse
- 34: Abgasrohrführung
- 35: Scheibenbremse
- 36: unterer Querlenker
- 37: oberer Querlenker

- 1': Radaufhängung (gegenüberliegend)

- α: Pfeilungswinkel

- x: Fahrzeuglängsrichtung
- y: Fahrzeugquerrichtung
- z: Fahrzeughochrichtung

## Patentansprüche

1. Radaufhängung (1; 1') für ein elektrisch antreibbares Rad (2) eines Fahrzeugs, umfassend einen sich in Fahrzeuglängsrichtung (x) erstreckenden, über ein aufbauseitiges Lager (9) gelenkig gegenüber dem Fahrzeugaufbau (8) gelagerten Längslenker (3), in den ein Radträger (4) zur drehbaren Lagerung des Rades (2) auf einer Radachse (12) sowie eine einen elektrischen Motor (16) umfassende elektrische Antriebseinheit (5) zum Antrieb des Rades (2) integriert sind, wobei der elektrische Motor (16) von der Radachse (12) beabstandet, in Richtung des aufbauseitigen Lagers (9) verschoben angeordnet und mittels einer Getriebeanordnung (17) mit dem Rad (2) in Antriebsverbindung bringbar ist, **dadurch gekennzeichnet, dass** der Radträger (4) neben der Lagerung über den Längslenker (3) zudem über zwei im Wesentlichen quer zur Fahrzeuglängsrichtung (x) weisende, übereinander angeordnete Querlenker (6, 7; 36, 37) gelenkig gegenüber dem Fahrzeugaufbau (8) gelagert ist.

2. Radaufhängung nach Anspruch 1, **dadurch gekennzeichnet, dass** der Längslenker (3) über ein Lager (9) mit dem Fahrzeugaufbau (8) verbunden ist und die beiden Querlenker (6, 7; 36, 37) aufbauseitig jeweils über ein Lager (10, 11) mit einem dem Fahrzeugaufbau (8) zugeordneten, daran befestigbaren Hilfsrahmen (21) verbunden sind.

3. Radaufhängung nach Anspruch 2, **dadurch gekennzeichnet, dass** sämtliche der aufbauseitigen Lager (9, 10, 11) bezogen auf die Fahrzeuglängsrichtung (x) auf einer Seite der Radachse (12), vorzugsweise vor der Radachse (12), angeordnet sind.

4. Radaufhängung nach einem der vorigen Ansprüche, **dadurch gekennzeichnet, dass** ein unterer Querlenker (6; 36) unterhalb der Radachse (12) an den Radträger (4) oder den Längslenker (3) angelenkt ist und ein oberer Querlenker (7; 37) oberhalb der Radachse (12) an den Radträger (4) oder den Längslenker (3) angelenkt ist.

5. Radaufhängung nach einem der vorigen Ansprüche, **dadurch gekennzeichnet, dass** die Erstreckungsrichtung der Querlenker (6, 7) gegenüber der Fahrzeugquerrichtung (y) einen Pfeilungswinkel (α) einschließt.

6. Radaufhängung nach einem der vorigen Ansprüche, **dadurch gekennzeichnet, dass** sich die Querlenker (6, 7) parallel zur Fahrzeugquerrichtung (y) erstrecken, wobei dem Längslenker (3) ein Spurkorrekturlenker (13) zugeordnet ist, der lenkerseitig mit einem zwischen Radträger (4) und aufbauseitigem Lager (9) angeordneten Lager (14) an den Längslenker (3) angelenkt ist und aufbauseitig mit einem Lager (15) an den Fahrzeugaufbau (8) oder einen daran befestigten Hilfsrahmen (21) angelenkt ist.

7. Radaufhängung nach Anspruch 6, **dadurch gekennzeichnet, dass** der Spurkorrekturlenker (13) so gestaltet und angeordnet ist, dass in Zusammenwirkung von Längslenker (3), Querlenkern (6, 7; 36, 37) und Spurkorrekturlenker (13) ein Spurwinkel der Radachse (12) nur gering von Höhenbewegungen des Längslenkers (3) beeinflusst wird.

8. Radaufhängung nach einem der vorigen Ansprüche, **dadurch gekennzeichnet, dass** das aufbauseitige Lager (9) des Längslenkers (3) zur Ermöglichung einer Querbeweglichkeit eine zumindest geringfügige Elastizität aufweist.

9. Radaufhängung nach einem der vorigen Ansprüche, **dadurch gekennzeichnet, dass** die Getriebeanordnung (17) ein Stirnradgetriebe (18) und ein Planetengetriebe (19) umfasst, die in Kraftflussrichtung im Zugbetrieb betrachtet abtriebsseitig des elektrischen Motors (16) in der Reihenfolge Planetengetriebe (19), Stirnradgetriebe (18) angeordnet sind.

10. Radaufhängung nach Anspruch 9, **dadurch gekennzeichnet, dass** das Planetengetriebe (19) und das Stirnradgetriebe (18) axial betrachtet an der dem Rad (2) zugewandten Seite des elektrischen Motors (16) angeordnet sind.

11. Radaufhängung nach einem der vorigen Ansprüche, **gekennzeichnet durch** eine Feder-Dämpfer-Anordnung (20) zur Abstützung des Längslenkers (3) gegenüber dem Fahrzeugaufbau (8), wobei die Feder-Dämpfer-Anordnung (20) an den Längslenker (3) in einem zwischen elektrischer Antriebseinheit (5) und Querlenkern (6, 7) liegenden Bereich (25) angelenkt ist oder an die elektrische Antriebseinheit angelenkt ist oder in einem in Bezug auf die Fahrzeuglängsrichtung hinter den Querlenkern liegenden Bereich an den Längslenker angelenkt ist.

12. Fahrzeugachse (23; 33), gebildet aus zwei sich gegenüberliegend angeordneten Radaufhängungen (1; 1') nach zumindest einem der vorigen Ansprüche sowie einem dazwischenliegenden Hilfsrahmen (21) zur fahrzeugaufbauseitigen Anbindung eines oder mehrerer Lenker, insbesondere der Querlenker (6, 7; 36, 37) und/oder des Spurkorrekturlenkers (13) je einer der Radaufhängungen (1, 1').

13. Fahrzeugachse nach Anspruch 12, **dadurch gekennzeichnet, dass** der Hilfsrahmen (21) als Aufnahme für eine Energiespeichereinrichtung (22) und/oder eine Steuerungseinrichtung dient.

## Claims

1. Wheel suspension system (1; 1') for an electrically driven wheel (2) of a vehicle, comprising a trailing arm (3) which extends in the vehicle longitudinal direction (x), is mounted in an articulated manner with respect to the vehicle body (8) via a body-side bearing (9), and into which a wheel support (4), for rotatably mounting the wheel (2) on a wheel axle (12), and an electric drive unit (5) comprising an electric motor (16) for driving the wheel (2) are integrated, it being possible for the electric motor (16) to be brought into a drive connection with the wheel (2) by means of a transmission arrangement (17) and in a manner which is spaced apart from the wheel axle (12) and is arranged displaced in the direction of the body-side bearing (9), **characterized in that**, in addition to the mounting via the trailing arm (3), the wheel support (4) is additionally mounted in an articulated manner with respect to the vehicle body (8) via two control arms (6, 7; 36, 37) which are arranged above one another and point substantially transversely with respect to the vehicle longitudinal direction (x).

2. Wheel suspension system according to Claim 1, **characterized in that** the trailing arm (3) is connected to the vehicle body (8) via a bearing (9), and the two control arms (6, 7; 36, 37) are connected on the body side in each case via a bearing (10, 11) to a subframe (21) which is assigned to the vehicle body (8) and can be fastened to the latter.

3. Wheel suspension system according to Claim 2, **characterized in that** all of the body-side bearings (9, 10, 11) are arranged on one side of the wheel axle (12) in relation to the vehicle longitudinal direction (x), preferably in front of the wheel axle (12).

4. Wheel suspension system according to one of the preceding claims, **characterized in that** a lower control arm (6; 36) is articulated below the wheel axle (12) on the wheel support (4) or the trailing arm (3), and an upper control arm (7; 37) is articulated above the wheel axle (12) on the wheel support (4) or the trailing arm (3) .

5. Wheel suspension system according to one of the preceding claims, **characterized in that** the direction of extent of the control arms (6, 7) encloses a sweep angle (a) with respect to the vehicle transverse direction (y).

6. Wheel suspension system according to one of the preceding claims, **characterized in that** the control arms (6, 7) extend parallel to the vehicle transverse direction (y), the trailing arm (3) being assigned a toe correction link (13) which is articulated on the link side to the trailing arm (3) by way of a bearing (14) which is arranged between the wheel support (4) and the body-side bearing (9), and is articulated on the body side by way of a bearing (15) on the vehicle body (8) or a subframe (21) which is fastened to the latter.

7. Wheel suspension system according to Claim 6, **characterized in that** the toe correction link (13) is designed and arranged in such a way that the interaction of trailing arm (3), control arms (6, 7; 36, 37) and toe correction link (13), results in a toe angle of the wheel axle (12) being influenced only slightly by vertical movements of the trailing arm (3).

8. Wheel suspension system according to one of the preceding claims, **characterized in that** the body-side bearing (9) of the trailing arm (3) has an at least slight elasticity in order to make a transverse movability possible.

9. Wheel suspension system according to one of the preceding claims, **characterized in that** the transmission arrangement (17) comprises a spur gear mechanism (18) and a planetary gear mechanism (19) which, as viewed in the power flow direction in traction mode, are arranged on the output side of the electric motor (16) in the sequence of planetary gear mechanism (19) and spur gear mechanism (18) .

10. Wheel suspension system according to Claim 9, **characterized in that** the planetary gear mechanism (19) and the spur gear mechanism (18) are arranged, as viewed axially, on that side of the electric motor (16) which faces the wheel (2).

11. Wheel suspension system according to one of the preceding claims, **characterized by** a spring-damper arrangement (20) for supporting the trailing arm (3) with respect to the vehicle body (8), the spring-damper arrangement (20) being articulated on the trailing arm (3) in a region (25) which lies between electric drive unit (5) and control arms (6, 7), or being articulated on the electric drive unit, or being articulated on the trailing arm in a region which lies behind the control arms in relation to the vehicle longitudinal direction.

12. Vehicle axle (23; 33), formed from two wheel suspension systems (1; 1') according to at least one of the preceding claims which are arranged so as to lie opposite one another, and from a subframe (21) which lies in between for the vehicle body-side attachment of one or more links, in particular the control arms (6, 7; 36, 37) and/or the toe correction link (13) of in each case one of the wheel suspension systems (1, 1').

13. Vehicle axle according to Claim 12, **characterized in that** the subframe (21) serves as a mounting for an energy storage device (22) and/or a control device.

## Revendications

1. Suspension de roue (1 ; 1') pour une roue (2) de véhicule pouvant être entraînée électriquement, comportant un bras oscillant longitudinal (3) s'étendant dans la direction longitudinale du véhicule (x) et monté de manière articulée par rapport à la carrosserie de véhicule (8) par le biais d'un palier (9) côté carrosserie, bras oscillant longitudinal dans lequel sont intégrés un support de roue (4) servant au montage rotatif de la roue (2) sur un axe de roue (12) ainsi qu'une unité d'entraînement électrique (5) comportant un moteur électrique (16) pour l'entraînement de la roue (2), le moteur électrique (16) étant espacé de l'axe de roue (12), disposé de manière décalée en direction du palier (9) côté carrosserie et pouvant être amené en liaison d'entraînement avec la roue (2) au moyen d'un ensemble de transmission (17),
**caractérisée en ce que** le support de roue (4) est, en plus du montage par le biais du bras oscillant longitudinal (3), en outre monté de manière articulée par rapport à la carrosserie de véhicule (8) par le biais de deux bras oscillants transversaux (6, 7 ; 36, 37) superposés orientés sensiblement transversalement à la direction longitudinale du véhicule (x).

2. Suspension de roue selon la revendication 1, **caractérisée en ce que** le bras oscillant longitudinal (3) est relié à la carrosserie de véhicule (8) par le biais d'un palier (9) et les deux bras oscillants transversaux (6, 7 ; 36, 37) sont reliés du côté de la carrosserie, respectivement par le biais d'un palier (10, 11), à un cadre auxiliaire (21) associé à la carrosserie de véhicule (8) et pouvant être fixé à celle-ci.

3. Suspension de roue selon la revendication 2, **caractérisée en ce que** tous les paliers (9, 10, 11) côtés carrosserie sont disposés d'un côté de l'axe de roue (12), de préférence devant l'axe de roue (12), par rapport à la direction longitudinale du véhicule (x).

4. Suspension de roue selon l'une des revendications précédentes, **caractérisée en ce qu'**un bras oscillant transversal inférieur (6 ; 36) est articulé sur le support de roue (4) ou sur le bras oscillant longitudinal (3) en dessous de l'axe de roue (12) et un bras oscillant transversal supérieur (7 ; 37) est articulé sur le support de roue (4) ou sur le bras oscillant longitudinal (3) au-dessus de l'axe de roue (12).

5. Suspension de roue selon l'une des revendications précédentes, **caractérisée en ce que** la direction d'étendue des bras oscillants transversaux (6, 7) forme un angle de flèche (a) par rapport à la direction transversale du véhicule (y).

6. Suspension de roue selon l'une des revendications précédentes, **caractérisée en ce que** les bras oscillants transversaux (6, 7) s'étendent parallèlement à la direction transversale du véhicule (y), un bras oscillant de correction de pincement (13) étant associé au bras oscillant longitudinal (3), lequel bras oscillant de correction de pincement est articulé sur le bras oscillant longitudinal (3) du côté du bras à l'aide d'un palier (14) disposé entre le support de roue (4) et le palier (9) côté carrosserie et articulé sur la carrosserie de véhicule (8) ou sur un cadre auxiliaire (21) fixé à celle-ci du côté de la carrosserie à l'aide d'un palier (15).

7. Suspension de roue selon la revendication 6, **caractérisée en ce que** le bras oscillant de correction de pincement (13) est configuré et disposé de telle sorte que que lors de la coopération du bras oscillant longitudinal (3), des bras oscillants transversaux (6, 7 ; 36, 37) et du bras oscillant de correction de pincement (13), un angle de pincement de l'axe de roue (12) n'est influencé que faiblement par des déplacements verticaux du bras oscillant longitudinal (3).

8. Suspension de roue selon l'une des revendications précédentes, **caractérisée en ce que** le palier (9), côté carrosserie, du bras oscillant longitudinal (3) présente une élasticité au moins faible pour permettre une mobilité transversale.

9. Suspension de roue selon l'une des revendications précédentes, **caractérisée en ce que** l'ensemble de transmission (17) comporte une transmission à pignons droits (18) et une transmission planétaire (19) qui, considérées dans le sens du flux de force en mode de traction, sont disposées du côté de la sortie du moteur électrique (16) dans l'ordre transmission planétaire (19), transmission à pignons droits (18).

10. Suspension de roue selon la revendication 9, **caractérisée en ce que** la transmission planétaire (19) et la transmission à pignons droits (18) sont, considérées axialement, disposées sur le côté du moteur électrique (16) tourné vers la roue (2).

11. Suspension de roue selon l'une des revendications précédentes, **caractérisée par** un ensemble ressort-amortisseur (20) servant à supporter le bras oscillant longitudinal (3) par rapport à la carrosserie de véhicule (8), l'ensemble ressort-amortisseur (20) étant articulé sur le bras oscillant longitudinal (3) dans une région (25) située entre l'unité d'entraînement électrique (5) et les bras oscillants transversaux (6, 7) ou étant articulé sur l'unité d'entraînement électrique ou étant articulé sur le bras oscillant longitudinal dans une région située derrière les bras oscillants transversaux par rapport à la direction longitudinale du véhicule.

12. Essieu de véhicule (23 ; 33), formé à partir de deux suspensions de roue (1 ; 1'), disposées en regard l'une de l'autre, selon au moins l'une des revendications précédentes ainsi que d'un cadre auxiliaire (21) situé entre celles-ci pour la connexion, côté carrosserie de véhicule, d'un ou plusieurs bras oscillants, en particulier des bras oscillants transversaux (6, 7 ; 36, 37) et/ou du bras oscillant de correction de pincement (13) de chacune des suspensions de roue (1, 1').

13. Essieu de véhicule selon la revendication 12, **caractérisé en ce que** le cadre auxiliaire (21) sert de logement pour un dispositif d'accumulation d'énergie (22) et/ou un dispositif de commande.
